# EUROPÄISCHE PATENTSCHRIFT

(11) **EP 2 093 138 B1**
(45) Veröffentlichungstag und Bekanntmachung des Hinweises auf die Patenterteilung: **22.09.2010**
(21) Anmeldenummer: 09002316.9
(22) Anmeldetag: 19.02.2009
(51) Int. Cl.: B62M 9/10

(54) **Gewichtsoptimiertes Mehrfach-Kettenzahnrad für ein Fahrrad**
Weight-optimised multiple-chain gear wheel for a bicycle
Roue dentée à chaîne multiple à poids optimisé pour un vélo

(30) Priorität: 23.02.2008 DE 102008010903
(43) Veröffentlichungstag der Anmeldung: 26.08.2009
(73) Patentinhaber: SRAM Deutschland GmbH, 97424 Schweinfurt (DE)
(72) Erfinder: Braedt, Henrik Dipl.-Ing., 97076 Würzburg (DE)

(56) Entgegenhaltungen:
- EP-A- 0 002 964
- EP-A- 1 074 462
- DE-C- 892 561
- GB-A- 2 177 628
- US-A- 4 741 724

## Beschreibung

Die Erfindung betrifft ein Mehrfach-Kettenzahnrad mit unterschiedlich großen Zahnkränzen zur Aufnahme einer Kette und zur Übertragung einer von dieser eingeleiteten Umfangkraft auf eine Nabe eines Hinterrades eines Fahrrades mit der Möglichkeit, die Kette durch eine Schalteinrichtung von einem auf einen anderen Zahnkranz zu wechseln, wobei jedem Zahnkranz ein gedachtes ringförmiges Tragelement zugeordnet ist, das mit dem jeweiligen Zahnkranz verbunden ist.

Bei Mehrfach-Kettenzahnrädern der herkömmlichen Art wird eine Kassette, bestehend aus einer Vielzahl von Zahnkränzen mit unterschiedlichen Durchmessern auf einem Mitnehmer einer Nabe angeordnet. Die Zähne eines jeden Zahnkranzes kommen beim Betätigen der Schalteinrichtung abwechselnd in Eingriff mit der Kette und übertragen ein Drehmoment aus den Pedalkräften des Fahrers auf den Mitnehmer über ein Profil, das die Zahnkränze mit dem Mitnehmer drehfest verbindet. Jedes dieser Zahnkränze überträgt also individuell das Drehmoment auf den Mitnehmer, wodurch es sowohl im Bereich der Mitnahme am Längsprofil des Mitnehmers, wie auch am Zahnkranz wegen der seitlich wirkenden Kräfte durch die meist nicht fluchtende Kette stärker und schwerer ausgebildet sein muss. Die Anforderungen im Radrennsport erfordern eine immer leichtere Bauweise für alle Elemente am Fahrrad, weshalb man zusätzlich die Zahnkränze mit Durchbrüchen versehen und leichtere Materialien eingesetzt hat.

Diese leichteren Materialien haben aber meist gegenüber gehärtetem Stahl Nachteile hinsichtlich Härte, Dehnung und Verschleiß, weshalb versucht wird, durch eine massivere Bauweise diese Nachteile auszugleichen. Hierdurch allerdings werden die Vorteile zumindest teilweise wieder geschmälert.

Aus der US-Patentschrift Nr. 4,642,075 ist ein Mehrfach-Kettenzahnrad mit unterschiedlich großen Zahnkränzen bekannt geworden, bei dem die Kette durch eine Schalteinrichtung von einem auf einen anderen Zahnkranz gewechselt werden kann. Es handelt sich hierbei um ein durch Stanzen und Prägen hergestelltes Doppelzahnrad mit angeformter Speichen-Schutzscheibe, das aus einer Platine einteilig hergestellt ist. Der kleinere der beiden Zahnkränze ist mit dem größeren durch Stege verbunden, die jeweils radial innerhalb einer Zahnlücke des kleineren Zahnkranzes beginnen und schräg am Innendurchmesser des größeren Zahnkranzes einlaufen. Das gezeigte Prinzip stellt eine kostengünstige Lösung für Mehrfach-Kettenzahnräder mit Zahnkränzen dar, die große Unterschiede in den Zähnezahlen aufweisen.

Auf ähnliche Weise wird ein Doppelzahnrad mit einer angeformten Speichen-Schutzscheibe gemäß der US-Patentschrift Nr. 4,380,445 hergestellt. Es gilt das für die US-Patentschrift Nr. 4,642,075 Gesagte ohne Einschränkung.

Aus der GB 2 177 628 A ist ein gattungsgemäßer Mehrfach-Kettenzahnrad bekannt.

Als Weiterentwicklung der vorgenannten Kassette wird ein Mehrfach-Kettenzahnrad vorgeschlagen, das sich hinsichtlich der Anzahl der Zahnkränze von der vorgenannten Kassette nur unwesentlich unterscheidet, jedoch nur aus zwei Teilen besteht, die mit dem Mitnehmer der Nabe verbindbar sind. Der erste Teil ist der größte Zahnkranz, der an seinem kleinsten Durchmesser ein Profil aufweist, das zu dem des Mitnehmers passt und eine drehfeste Verbindung zwischen diesem und dem größten Zahnkranz bei der Montage gewährleistet.

Der zweite und wichtigere Teil ist ein Zahnkranz-Hohlkörper, der kegelig ausgeführt ist und alle übrigen Zahnkränze trägt. Er besteht aus gedachten Tragelementen, deren Durchmesser sich nach dem des zugeordneten Zahnkranzes richtet und durch die Aneinanderreihung aller dieser Tragelemente eine Treppenform erzielt, die dem Zahnkranz-Hohlkörper als Ringkörper ein Optimum zwischen Festigkeit und seinen Wandstärken verleiht, wenn der rohrförmige Teil im wesentlichen senkrecht zum scheibenförmigen Teil angeordnet ist. Durch die einteilige Verbindung aller Tragelemente entsteht ein stabiler Zahnkranz-Hohlkörper, dessen Wandstärke zur Optimierung des Verhältnisses zwischen seinem Gewicht und seiner Festigkeit sehr dünn ausgeführt sein kann. An seinem kleinsten Durchmesser weist der Zahnkranz-Hohlkörper ebenfalls ein Profil auf, durch das er auf dem Mitnehmer der Nabe, wenn nicht drehfest verbunden, so doch zentriert ist.

Der größte Zahnkranz und der Zahnkranz-Hohlkörper werden zu einer Einheit, wenn man beide Teile über eine ringförmige unlösbare Verbindung fixiert. Diese Einheit weist funktionell keinen Unterschied mehr zu den herkömmlichen Kassetten auf. Für die Verbindung kommen mehrere Fertigungsmethoden, beispielsweise Schweißen, Nieten, Fügen oder ähnliche Verfahren in Betracht, wobei allen das Ziel, nämlich die genaue Zentrierung der beiden Teile gemeinsam ist. Da große Drehmomente übertragen werden, ist auch die Genauigkeit hinsichtlich der Abstützung des größten Zahnkranzes und des Zahnkranz-Hohlkörpers auf dem Profil des Mitnehmers von großer Bedeutung.

Jedes der ringförmigen Tragelemente besteht aus einem rohrförmigen Teil und einem scheibenförmigen Teil mit einer zum nächst kleineren Zahnkranz weisenden Scheiben-Frontfläche, wobei der Zahnkranz mit dem scheibenförmigen Teil einteilig verbunden ist. Dieser Zahnkranz weist ebenfalls zum nächst kleineren Zahnkranz weisend eine Zahn-Frontfläche auf, die gegenüber der Scheiben-Frontfläche einen Versatz aufweist.

Es ist bekannt, dass die Zähne des Zahnkranzes Steighilfen aufweisen, die die Umsetzung der Kette - auch unter Last - von einem auf einen anderen Zahnkranz erleichtert. Speziell der Kettenwechsel von einem kleineren Zahnkranz auf einen größeren Zahnkranz muss von Zähnen am jeweils größeren Zahnkranz unterstützt werden, die in ihrer Form verändert sind, um das Einlaufen der Kette in den neuen Zahnkranz zu erleichtern und eine Lasche der Kette einzufangen. Zu diesem Zweck werden bestimmte Zähne an ihrer Zahn-Frontfläche schmaler gefräst, andere werden gekürzt oder gar entfernt. Ein aus dem Vollen gedrehtes Rohteil für einen Zahnkranz-Hohlkörper gemäß dem Vorschlag dieser Erfindung weist an seinen scheibenförmigen und rohrförmigen Teilen aus Gründen der Gewichtserleichterung sehr dünne Wandstärken auf, die bei einer Ausführung in Stahl weit unter 1 mm liegen. Damit nur an Zahn-Frontflächen der Zahnkränze und nicht an Scheiben-Frontflächen der scheibenförmigen Teile gefräst wird, springt die Zahn-Frontfläche gegenüber der Scheiben-Frontfläche um die Größe des Versatzes vor, dessen Größe mindestens einer Tiefe für die Fräsoperationen für die Steighilfen entspricht. Es geht darum, mit den Fräswerkzeugen nicht in den filigran ausgebildeten scheibenförmigen Teil zu fahren, wo sie leicht örtliche Zerstörungen anrichten können. Es hat sich gezeigt, dass mit einer Größe des Versatzes von etwa der halben Zahnbreite eines Zahnkranzes eine ausreichende Sicherheit erzielt wird. Da das Rohteil des Zahnkranz-Hohlkörpers aus dem Vollen hauptsächlich durch Drehoperationen entsteht, werden die Frontflächen und mithin der Versatz bei diesem Arbeitsgang fertig bearbeitet.

Die Erfindung hat es sich zur Aufgabe gemacht, ein Mehrfach-Kettenzahnrad zu schaffen, das an einer Nabe eines Fahrrades gegen herkömmliche Mehrfach-Kettenzahnräder austauschbar ist und zur Verwendung in Rennrädern ein Optimum zwischen Gewicht und Festigkeit aufweist.

Die Lösung der Aufgabe ist im kennzeichnenden Teil des Hauptanspruches beschrieben. Ausgestaltungen sind den Unteransprüchen zu entnehmen.

Anhand zweier Zeichnungen wird ein Mehrfach-Kettenzahnrad für eine Nabe am Hinterrad eines Fahrrades erläutert. Es zeigen
- Fig. 1: ein Mehrfach-Kettenzahnrad als Zusammenbau eines größten Zahnkranzes mit einem Zahnkranz-Hohlkörper auf einem Mitnehmer einer Nabe als Skizze.
- Fig. 2: einen Ausschnitt aus dem Zahnkranz-Hohlkörper mit zwei Tragelementen und ihren Zahnkränzen im Schnitt;

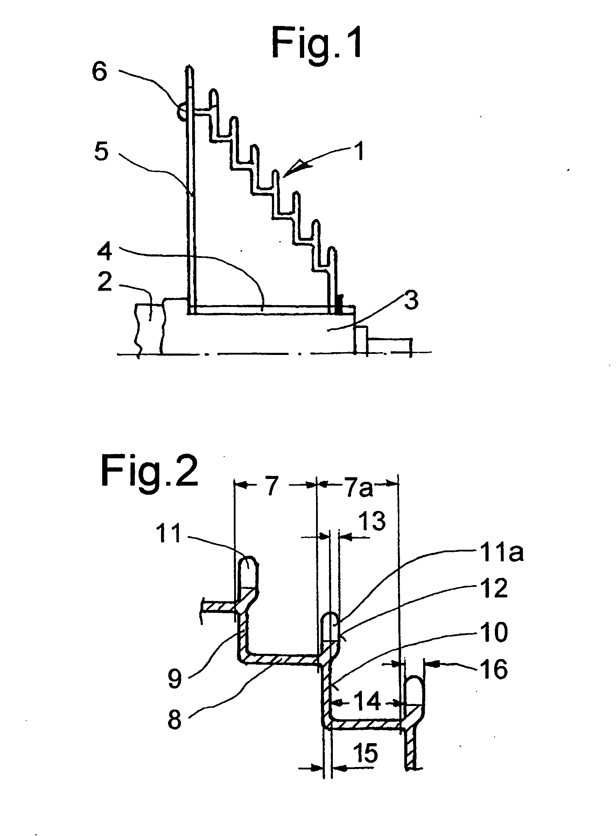

Es wird gemäß der Fig. 1 ein Mehrfach-Kettenzahnrad, bestehend aus einem größten Zahnkranz 5 und einem kegeligen Zahnkranz-Hohlkörper 1 beschrieben, das auf einem Mitnehmer 3 einer Nabe 2 eines Fahrrades montierbar ist. Der größte Zahnkranz 5 wird durch eine Verbindung 6 mit dem Zahnkranz-Hohlkörper 1 lösbar oder unlösbar verbunden, die durch Schweißen, Fügen, Nieten, Stecken oder ähnliche Verfahren hergestellt wird. Zur Montage auf einem Profil 4 des Mitnehmers 3 weisen der größte Zahnkranz 5 und wahlweise der Zahnkranz-Hohlkörper 1 je ein Profil 4 auf, welches das Mehrfach-Kettenzahnrad mit dem des Mitnehmers 3 drehfest fixiert.

Wie aus der Fig. 2 ersichtlich, weist der Zahnkranz-Hohlkörper 1 ein gedachtes Tragelement 7 auf, das als Ringkörper aufzufassen ist und aus einem rohrförmigen Teil 8 sowie aus einem scheibenförmigen Teil 9 besteht. Der scheibenförmige Teil 9 weist eine zum nächst kleineren Zahnkranz 11 a weisende Scheiben-Frontfläche 10 auf und ist mit dem Zahnkranz 11 einteilig verbunden. Dieser Zahnkranz 11 weist ebenfalls zum nächst kleineren Zahnkranz 11 a weisend eine Zahn-Frontfläche 12 auf, die gegenüber der Scheiben-Frontfläche 10 einen Versatz 13 aufweist, der eine Größe von etwa der Hälfte einer Zahnbreite 16 hat. An das Tragelement 7 schließt sich ein nächst kleineres Tragelement 7 a an, das mit einem nächst kleineren Zahnkranz 11 a einteilig verbunden ist, wobei sich die Abmessungen des neuen Ringkörpers mit Ausnahme der Durchmesser ähnlich sind und zwischen den Zahnkränzen 11 und 11 a ein Ritzel-Zwischenraum 14 entsteht.

Der Versatz 13 hat den Vorteil, dass an der Zahn-Frontfläche 12 Fräsoperationen vorgenommen werden können, ohne die wegen der Gewichtserleichterung erforderliche geringen Wandstärken 15 des Zahnkranz-Hohlkörpers 1, insbesondere an seinem scheibenförmigen Teil 9 mit den Werkzeugen zu verletzen.

Ein Versatz 13 zwischen der Scheiben-Frontfläche 10 und der Zahn-Frontfläche 12 kann auch am größten Zahnkranz 5 vorgesehen sein.

### Bezugszeichenliste

- 1.: Zahnkranz-Hohlkörper
- 2.: Nabe
- 3.: Mitnehmer
- 4.: Profil
- 5.: größter Zahnkranz
- 6.: Verbindung
- 7.: Tragelement
- 7 a: Tragelement
- 8.: rohrförmiger Teil
- 9.: scheibenförmiger Teil
- 10.: Scheiben-Frontfläche
- 11.: Zahnkranz
- 11 a: Zahnkranz
- 12.: Zahn-Frontfläche
- 13.: Versatz
- 14.: Ritzel-Zwischenraum
- 15.: Wandstärke
- 16.: Zahnbreite

## Patentansprüche

1. Mehrfach-Kettenzahnrad mit unterschiedlich großen Zahnkränzen zur Aufnahme einer Kette und zur Übertragung einer von dieser eingeleiteten Umfangkraft auf eine Nabe eines Hinterrades eines Fahrrades mit der Möglichkeit, die Kette durch eine Schalteinrichtung von einem auf einen anderen Zahnkranz zu wechseln, wobei mehreren Zahnkränzen (11) ein gedachtes ringförmiges Tragelement (7) zugeordnet ist, das mit dem jeweiligen Zahnkranz (11) verbunden ist,
wobei ein Zahnkranz (11) zum nächst kleineren Zahnkranz (11a) weisend eine Zahn-Frontfläche (12) und ein scheibenförmiger Teil (9) des Tragelementes (7) ebenfalls zum nächst kleineren Zahnkranz (11a) weisend eine Scheiben-Frontfläche (10) aufweist, wobei die Scheiben-Frontfläche (10) gegenüber der Zahn-Frontfläche (12) einen Versatz (13) aufweist, und **dadurch gekennzeichnet, dass** der scheibenförmige Teil (9) des Tragelementes (7) eine dünne Wandstärke (15) aufweist, die geringer ist als die Zahnbreite (16).

2. Mehrfach-Kettenzahnrad nach Anspruch 1,
**dadurch gekennzeichnet,**
**dass** das Tragelement (7) aus dem scheibenförmigen Teil (9), einem rohrförmigen Teil (8) und dem einteilig mit dem scheibenförmigen Teil (9) verbundenen Zahnkranz (11) besteht.

3. Mehrfach-Kettenzahnrad nach Anspruch 1 oder 2,
**dadurch gekennzeichnet,**
**dass** bezogen auf einen Ritzel-Zwischenraum (14) die Zahn-Frontfläche (12) gegenüber der Scheiben-Frontfläche (10) durch den Versatz (13) vorspringend ausgebildet ist.

4. Mehrfach-Kettenzahnrad nach einem der Ansprüche 1 bis 3,
**dadurch gekennzeichnet,**
**dass** die Größe des Versatzes (13) mindestens einer Tiefe für Fräsoperationen zur Anordnung von Steighilfen an den Zähnen des Zahnkranzes (11) im Bereich der Zahn-Frontfläche (12) entspricht, um nicht den schwach ausgebildeten scheibenförmigen Teil (9) mit den Fräswerkzeugen zu verletzen.

5. Mehrfach-Kettenzahnrad nach einem der Ansprüche 1 bis 4,
**dadurch gekennzeichnet,**
**dass** der Durchmesser des Tragelementes (2) sich jeweils nach dem Durchmesser seines Zahnkranzes (11) richtet, wodurch sich durch die Aneinanderreihung aller Tragelemente (7, 7a...) ein treppenförmiger kegeliger Zahnkranz-Hohlkörper (1) ausbildet.

6. Mehrfach-Kettenzahnrad nach einem der Ansprüche 1 bis 5,
**dadurch gekennzeichnet,**
**dass** der rohrförmige Teil (8) im wesentlichen senkrecht zum scheibenförmigen Teil (9) angeordnet ist und im Tragelement (2) als Ringkörper ein Optimum zwischen Festigkeit und Wandstärke (15) im Zahnkranz-Hohlkörper (1) darstellt.

7. Mehrfach-Kettenzahnrad nach einem der Ansprüche 1 bis 6,
**dadurch gekennzeichnet,**
**dass** der Versatz (13) zwischen der Zahn-Frontfläche (12) und der Scheiben-Frontfläche (10) im Zuge der Drehoperationen am Rohteil des Zahnkranz-Hohlkörpers (1) eingearbeitet wird.

8. Mehrfach-Kettenzahnrad nach einem der Ansprüche 1 bis 7,
**dadurch gekennzeichnet,**
**dass** der Versatz (13) einer Größe von mindestens der Hälfte der Zahnbreite (16) am Zahnkranz (11, 11 a...) entspricht.

9. Mehrfach-Kettenzahnrad nach einem der Ansprüche 1 bis 8,
**dadurch gekennzeichnet,**
**dass** der größte Zahnkranz (5) und der Zahnkranz-Hohlkörper (1) an ihrer gegenseitigen ringförmigen Berührungsstelle Mittel aufweisen, mit Hilfe derer eine nicht lösbare Verbindung (6) herstellbar ist.

10. Mehrfach-Kettenzahnrad nach einem der Ansprüche 1 bis 9,
**dadurch gekennzeichnet,**
**dass** das Mehrfach-Kettenzahnrad, bestehend aus dem größten Zahnkranz (5) und dem Zahnkranz-Hohlkörper (1) mit dem Mitnehmer (3) über ein Profil (4) drehfest verbunden ist.

## Claims

1. Multiple-chain gearwheel with sprockets of differing size for receiving a chain and for transmitting a peripheral force initiated by said chain to a hub of a rear wheel of a bicycle with the possibility of changing the chain from one sprocket to another by means of a gear-changing device, wherein a plurality of sprockets (11) is assigned an imaginary annular supporting element (7) which is connected to the respective sprocket (11), wherein a sprocket (11) facing the next smaller sprocket (11a) has a tooth front face (12), and a disc-shaped part (9) of the supporting element (7) likewise facing the next smaller sprocket (11a) has a disc front face (10), wherein the disc front face (10) has an offset (13) in relation to the tooth front face (12), and **characterized in that** the disc-shaped part (9) of the supporting element (7) has a thin wall thickness (15) which is less than the tooth width (16).

2. Multiple-chain gearwheel according to Claim 1, **characterized in that** the supporting element (7) consists of the disc-shaped part (9), a tubular part (8) and the sprocket (11) which is integrally connected to the disc-shaped part (9).

3. Multiple-chain gearwheel according to Claim 1 or 2, **characterized in that** the tooth front face (12) is designed to project in relation to the disc front face (10) by the offset (13) with respect to a pinion gap (14).

4. Multiple-chain gearwheel according to one of Claims 1 to 3, **characterized in that** the size of the offset (13) corresponds to at least a depth required for milling operations to arrange climbing aids on the teeth of the sprocket (11) in the region of the tooth front face (12), so as not to damage the disc-shaped part (9), which is of delicate design, by the milling tools.

5. Multiple-chain gearwheel according to one of Claims 1 to 4, **characterized in that** the diameter of the supporting element (2) conforms in each case to the diameter of the sprocket (11) thereof, thus resulting in the formation of a stepped, conical sprocket hollow body (1) by all of the supporting elements (7, 7a...) being arranged in a row next to one another.

6. Multiple-chain gearwheel according to one of Claims 1 to 5, **characterized in that** the tubular part (8) is arranged substantially perpendicularly to the disc-shaped part (9), and an optimum between strength and wall thickness (15) in the sprocket hollow body (1) is represented in the supporting element (2) in the form of an annular body.

7. Multiple-chain gearwheel according to one of Claims 1 to 6, **characterized in that** the offset (13) between the tooth front face (12) and the disc front face (10) is incorporated on the blank of the sprocket hollow body (1) during the turning operations.

8. Multiple-chain gearwheel according to one of Claims 1 to 7, **characterized in that** the offset (13) corresponds to a size of at least half of the tooth width (16) on the sprocket (11, 11a...).

9. Multiple-chain gearwheel according to one of Claims 1 to 8, **characterized in that** the largest sprocket (5) and the sprocket hollow body (1), at the mutual annular contact point thereof, have means, with the aid of which a non-releasable connection (6) can be produced.

10. Multiple-chain gearwheel according to one of Claims 1 to 9, **characterized in that** the multiple-chain gearwheel, consisting of the largest sprocket (5) and the sprocket hollow body (1), is connected in a rotationally fixed manner to the driver (3) via a profile (4).

## Revendications

1. Roue dentée à chaîne multiple comprenant des couronnes dentées de diverses tailles pour recevoir une chaîne et pour transmettre une force périphérique introduite par celle-ci à un moyeu de la roue arrière d'une bicyclette, avec la possibilité de faire passer la chaîne d'une couronne dentée à une autre au moyen d'un dispositif de changement de vitesse, un élément de support annulaire imaginaire (7) étant associé à plusieurs couronnes dentées (11) et étant connecté à la couronne dentée respective (11),
une couronne dentée (11) présentant, du côté tourné vers la couronne dentée (11a) adjacente plus petite, une surface frontale de dent (12) et une partie en forme de disque (9) de l'élément de support (7) présentant, également du côté tourné vers la couronne dentée adjacente plus petite (11a), une surface frontale de disque (10), la surface frontale de disque (10) présentant un décalage (13) par rapport à la surface frontale de dent (12), et
**caractérisée en ce que** la partie en forme de disque (9) de l'élément de support (7) présente une mince épaisseur de paroi (15), qui est plus petite que la largeur des dents (16).

2. Roue dentée à chaîne multiple selon la revendication 1,
**caractérisée en ce que**
l'élément de support (7) se compose de la partie en forme de disque (9), d'une partie (8) de forme tubulaire, et de la couronne dentée (11) connectée à la partie en forme de disque (9).

3. Roue dentée à chaîne multiple selon la revendication 1 ou 2,
**caractérisée en ce que**
par rapport à un espace intermédiaire entre pignons (14), la surface frontale de dent (12) est réalisée de manière saillante dans la mesure du décalage (13) par rapport à la surface frontale de disque (10).

4. Roue dentée à chaîne multiple selon l'une quelconque des revendications 1 à 3,
**caractérisée en ce que**
la taille du décalage (13) correspond au moins à une profondeur pour des opérations de fraisage pour l'agencement d'aides à la montée sur les dents de la couronne dentée (11) dans la région de la surface frontale de dent (12), afin de ne pas abîmer avec les outils de fraisage la partie en forme de disque (9) de réalisation peu solide.

5. Roue dentée à chaîne multiple selon l'une quelconque des revendications 1 à 4,
**caractérisée en ce que**
le diamètre de l'élément de support (2) dépend du diamètre de sa couronne dentée (11), de sorte que l'on obtienne, en alignant tous les éléments de support (7, 7a, ...) un corps creux de couronne dentée (1) conique en forme d'escalier.

6. Roue dentée à chaîne multiple selon l'une quelconque des revendications 1 à 5,
**caractérisée en ce que**
la partie tubulaire (8) est disposée de manière essentiellement perpendiculaire à la partie en forme de disque (9) et constitue dans l'élément de support (2), en tant que corps annulaire, un optimum entre solidité et épaisseur de paroi (15) dans le corps creux de couronne dentée (1).

7. Roue dentée à chaîne multiple selon l'une quelconque des revendications 1 à 6,
**caractérisée en ce que**
le décalage (13) entre la surface frontale de dent (12) et la surface frontale de disque (10) est usiné au cours des opérations de tournage sur la pièce brute du corps creux de couronne dentée (1).

8. Roue dentée à chaîne multiple selon l'une quelconque des revendications 1 à 7,
**caractérisée en ce que**
le décalage (13) correspond à une taille d'au moins la moitié de la largeur de dent (16) sur la couronne dentée (11, 11a, ...) .

9. Roue dentée à chaîne multiple selon l'une quelconque des revendications 1 à 8,
**caractérisée en ce que**
la plus grande couronne dentée (5) et le corps creux de couronne dentée (1) présentent, sur leurs points de contact annulaire opposés, des moyens à l'aide desquels une connexion (6) non desserrable peut être créée.

10. Roue dentée à chaîne multiple selon l'une quelconque des revendications 1 à 9,
**caractérisée en ce que**
la roue dentée à chaîne multiple, constituée de la plus grande roue dentée (5) et du corps creux de couronne dentée (1), est connectée de manière solidaire en rotation au dispositif d'entraînement (3) par le biais d'un profilé (4).
